# EUROPEAN PATENT APPLICATION

(11) **EP 4 592 238 A1**
(43) Date of publication of application: **30.07.2025**
(21) Application number: 24220795.9
(22) Date of filing: 17.12.2024
(51) Int. Cl.: B66F 9/075, B60K 1/04, B60L 53/80, B60S 5/06, H01M 50/204

(54) **INDUSTRIAL TRUCK PROVIDED WITH AN IMPROVED DOOR OF THE BATTERY COMPARTMENT**

(30) Priority: 25.01.2024 IT 202400001437
(71) Applicant: Toyota Material Handling Manufacturing Italy S.p.A, 40132 Bologna (IT)
(72) Inventor: NARDELLA, Andrea Federico, 40033 Casalecchio di Reno (BO) (IT); DELIZIOSI GIORDANO, Simone, 40128 Bologna (IT)
(74) Representative: Hoffmann Eitle

(57) **Abstract**

An electric industrial truck comprising a frame (30) in which there is present a battery-holder compartment (12) configured to house an electric battery (13), said battery-holder compartment comprising a lateral opening, the industrial truck further comprising a door (11) movable between a closing position, in which it at least partly closes the lateral opening, and an opening position, in which the door allows access to the electric battery (13) in the battery-holder compartment (12) through the lateral opening, wherein the door (11) is mounted slidably with respect to the frame (30) between the closing position and the opening position.

## Description

### Field of the invention

The present invention relates to an industrial truck and, more in general, an electric industrial truck provided with an improved door for the battery compartment.

### Technical background

It is known in the art to make industrial trucks provided with material handling means, such as a forklift, which can be used for example in an industrial site, a warehouse, a port or the like. The forklift can be coupled to different material handling devices, such as a fork, a gripper, a rod for material in reels or other.

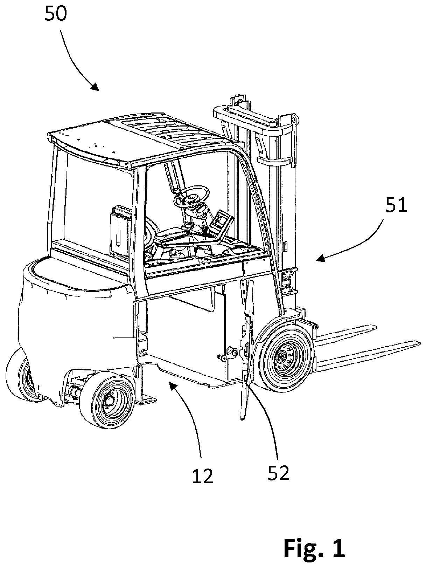

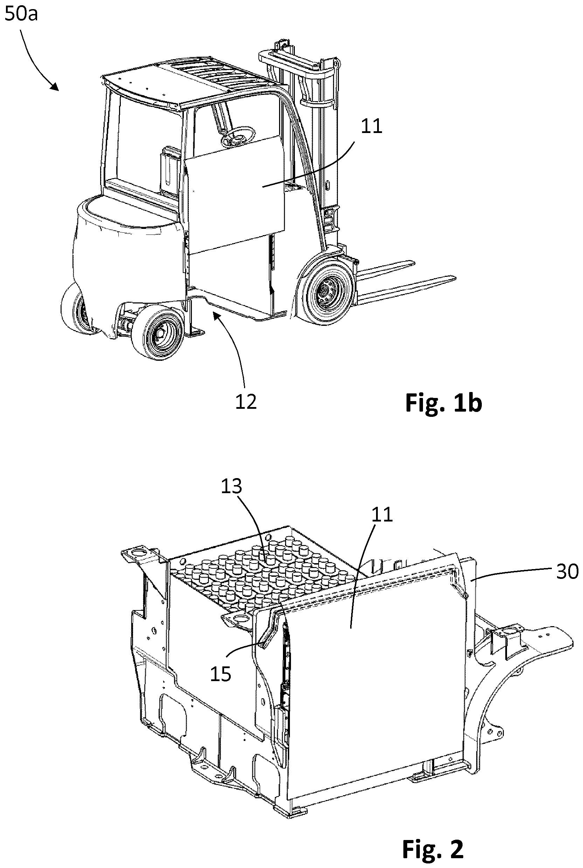

In recent years, industrial trucks have become increasingly widespread, powered electrically by a battery. An example of an electrically powered industrial truck is shown in Figure 1 with the reference number 50; the truck includes material handling means 51, for example a mast and a fork translatable along the mast. The battery is positioned in a special compartment 12 obtained in the frame of the truck, for example below the seat of the truck driver. The battery and the respective compartment 12 have a certain size to guarantee a sufficient operating autonomy of the truck. The battery compartment is closed by a door 52 designed to alternatively close or open an access opening to the battery-holder compartment 12. In the example in Figure 1, the door 52 is hinged to the frame of the industrial truck so as to be rotatable around a substantially vertical axis between the opening and closing position of the battery-holder compartment.

With the solution described above, a problem of ease of operability arises since electric forklifts, both in indoor and outdoor environments, often move in narrow paths and, very often, for maintenance or recharging, operators must access the forklifts when they are still positioned or parked in such narrow ortight spaces. If the door is hinged to the frame, if the industrial truck is parked in a narrow space, it is difficult to access the battery-holder compartment due to the considerable overall dimensions of the door in the horizontal direction in the opening position. Furthermore, the doors are often made with rather heavy panels, so that the hinges must be specially sized, increasing production costs. The opening of this type of hinged doors is also not easy for operators since the panels forming the door must be made of printed or bent metal sheets with a rather heavy internal structure.

### Summary of the invention

In light of the problems highlighted above, an object of the present disclosure is to provide an industrial truck provided with a battery compartment closing door which can be easily closed and opened, even in tight spaces. A further object is to make a light and cheap door structure possible. A further object is to reduce the production costs of the industrial truck.

In light of the above, the present disclosure proposes an electric industrial truck comprising a frame in which there is present a battery-holder compartment configured to house an electric battery, said battery-holder compartment comprising a lateral opening, the industrial truck further comprising a door movable between a closing position, in which it at least partly closes the lateral opening, and an opening position, in which the door allows access to the electric battery in the battery-holder compartment through the lateral opening, wherein the door is mounted slidably with respect to the frame between the closing position and the opening position.

Preferably, the door is mounted slidably with respect to the frame in a substantially vertical direction.

Preferably, the compartment is open at the lower part to allow the removal/introduction of the electric battery from/into the compartment using transportation means that support the electric battery at the lower part.

Preferably, the door is mounted slidably along at least two guides, wherein the two guides are arranged on opposite sides of the lateral opening of the battery-holder compartment.

Preferably, the frame includes an inverted-U-shaped bearing element which extends in a longitudinal direction of the truck and which comprises two substantially vertical portions, wherein between the two substantially vertical portions there is positioned said lateral opening of the battery-holder compartment, each of said at least two guides being fixed to one of the two substantially vertical portions of the inverted-U-shaped bearing element.

Preferably, each guide is associated with a slider slidable along the guide, wherein the door is fixed to each slider.

Preferably, the industrial truck comprises locking means designed to lock the door in the opening position when the door is in the opening position.

Preferably, the industrial truck comprises a groove for discharging water positioned above the lateral opening and arranged between the door in a closing position and the frame of the industrial truck, so as to convey rainwater outside the battery-holder compartment.

Preferably, the door includes a first portion that is substantially flat and substantially vertical and a second folded portion above the first portion, where the second folded portion is folded towards the frame of the industrial truck so as to at least partially cover an interspace between the door and the compartment.

Preferably, the industrial truck comprises a handle fixed to the door at least in partly located in said interspace, preferably at the height of the second folded portion, said handle being accessible by a user from one side of the door.

Preferably, the industrial truck comprises the battery and in the opening position the door allows the electric battery to pass through the lateral opening of the battery-holder compartment.

Preferably, the industrial truck comprises a drive system and/or a system for handling material which can be power-supplied electrically through the electric battery housed in the battery-holder compartment.

Preferably, the battery-holder compartment extends between a front axle and a rear axle of the industrial truck, more preferably for an extension equal to at least 50% of the gap between the front axle and the rear axle in a longitudinal direction with respect to the truck.

### Brief description of the drawings

The present invention will be illustrated with reference to exemplary embodiments described with reference to the accompanying drawings.

In the drawings:
- Figure 1 illustrates an industrial truck with a closing door of the battery-holder compartment hinged to the frame;
- Figure 1b illustrates an industrial truck with a closing door of the battery-holder compartment slidable with respect to the frame according to the present disclosure;
- Figure 2 illustrates a frame of an industrial truck according to the present disclosure with the door in the closing position;
- Figure 3 illustrates the frame of an industrial truck according to Figure 2 with the door in the opening position;
- Figure 4 illustrates the frame of an industrial truck according to the present disclosure with the battery removed and the door removed;
- Figure 5 illustrates a sectional view of a door and of the frame of an industrial truck according to a vertical plane substantially perpendicular to the door,
- Figure 6 illustrates a detail of a handle of the door of a truck according to Figures 2 to 5.

### Detailed description

With reference to Figures 2 to 4, a frame 30 of an electric industrial truck 50a depicted in Figure Ib is shown. The industrial truck 50a of Figure Ib can be for example analogous to a forklift truck of the type illustrated in Figure 1. Still another type of industrial truck could employ the frame 30 according to the present disclosure. In general, the industrial truck 50a can include material handling means; the material handling means can for example include a mast along which a material gripping device, such as a fork, a gripper, or other known devices, can slide in a substantially vertical direction. For example, the industrial truck can be used in industrial sites, warehouses, ports, airports, logistic hubs or the like. The electric industrial truck can be of the hybrid type (i.e., provided with a traction or drive system that includes at least one electric motor and at least one combustion engine), or it could be completely electric (therefore with a traction system that does not include a combustion engine and instead includes only one or more electric motors).

In the frame 30 there is present a battery-holder compartment 12, configured to house an electric battery 13. "Electric battery" herein is intended as any battery system or electrical energy storage system, for example a lithium battery, lead acid battery, or other types of battery, or a combination of a plurality of battery modules or packs of any type according to the known art.

The electric battery 13 is configured to supply power to the main functions of the industrial truck, for example the drive function and/or the material handling function. For example, the electric battery 13 can be configured to supply electric power to one or more electric motors that constitute a traction system of the truck; in another example, the electric battery 13 can supply electric power to one or more actuators designed to handle a load, for example for lifting by means of a fork.

The battery-holder compartment 12 advantageously extends between a front axle and a rear axle of the industrial truck 50a, with a configuration similar to that shown in Figure 1a. Preferably, the battery-holder compartment 12 extends in a longitudinal direction with respect to the industrial truck so as to occupy at least 50% of the gap between a front wheel and a rear wheel of the industrial truck, more preferably at least 70% of the gap between a front wheel and a rear wheel of the industrial truck. Thereby, the battery compartment 12 and the battery 13 can occupy a sufficient volume to guarantee a desired autonomy of the industrial truck in terms of residual energy. Preferably, the battery-holder compartment is positioned below a seat of a driver of the industrial truck.

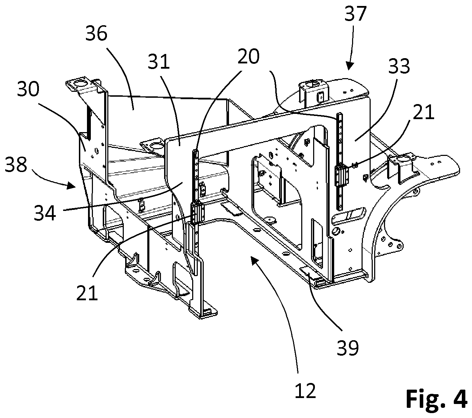

As clearly shown in Figure 4, the battery-holder compartment 12 comprises a lateral opening for the removal/introduction of the electric battery from/into the battery-holder compartment. The opening extends longitudinally for substantially the entire extension of the battery compartment 12. Preferably, the compartment 12 is open at the lower part to allow the removal/introduction of the electric battery from/into the compartment using transportation means that support the electric battery at the lower part, for example a pallet truck or another forklift truck; however, another configuration of the compartment 12 could also be employed in which the compartment is not open at the lower part and the battery is removed/introduced with another system, for example by means of a roller system.

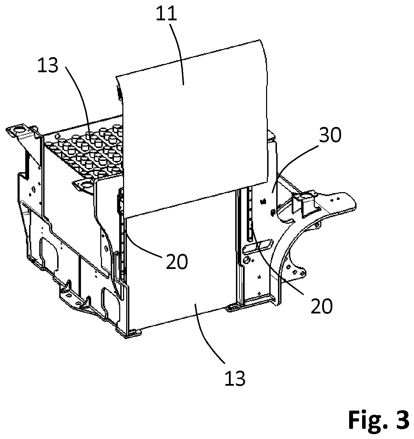

The industrial truck 50a further comprises a door 11 movable between a closing position (shown in Figure 2) and an opening position (shown in Figure 3). Preferably, the door 11 in the closing position at least partly closes the lateral opening of the compartment 12; preferably in the closing position the door 11 completely closes the lateral opening. Preferably, in the opening position the door 11 does not interfere with the electric battery 13 passing through the lateral opening of the battery-holder compartment 12. The door 11 is mounted slidably with respect to the frame 30 between the closing position and the opening position. Thanks to this arrangement, the footprint required by the door 11 in the opening position is reduced in a horizontal direction; therefore, access to the battery-holder compartment is facilitated even in narrow spaces. This allows to facilitate charging operations or any type of intervention on the battery 13, such as electrical connections or other.

Preferably, the door 11 is mounted slidably with respect to the frame 30 in a substantially vertical direction; in an alternative embodiment, the door could be slidable in a horizontal direction. More in general, the door 11 is slidable in a substantially vertical plane. Preferably, the door 11 is mounted slidably along at least two guides 20 (clearly shown in Figure 3 and 4), wherein the two guides are arranged on opposite sides of the lateral opening of the battery-holder compartment 12. Preferably, the guides are self-lubricating linear guides.

In an example, the guides 20 are fixed to a substantially vertical flat wall of the frame 30. Preferably, the frame 30 includes an inverted-U-shaped bearing element 31 which extends in a longitudinal direction of the truck; the inverted-U-shaped element 31 comprises two substantially vertical portions 33, 34 connected at the top by a crosspiece; the lateral opening of the battery-holder compartment 12 is positioned between the two substantially vertical portions 33, 34. Each of said at least two guides 20 is fixed to one of the two substantially vertical portions 33, 34 of the inverted-U-shaped bearing element 31. For example, a first guide 20 is fixed to a vertical portion 33 of the frame, while a second guide 20 is fixed to the vertical portion 34 of the frame. In an alternative embodiment, more than two guides 20 could also be present. For example, two guides 20 could be fixed on each vertical portion 33, 34. The guides 20 preferably have an elongated straight shape and a substantially vertical orientation.

Each guide 20 is associated with a slider 21 slidable along the respective guide 20. The door 11 is fixed to each slider 21. Preferably, the door 11 is fixed to two sliders 21, each associated with one of the guides 20, as shown in the figure. The door 11 can be fixed with removable fixing means, for example by means of screws or similar fixing means. The door 11 is fixed to the sliders 21 at opposite lateral ends of the door 11.

The frame 30 also includes a longitudinal element 36 opposite the opening of the battery-holder compartment 12. The frame therefore includes on opposite lateral sides a longitudinal element 36 and an opposite longitudinal element, preferably made with the inverted-U-shaped bearing element 31 described above. The inverted-U-shaped bearing element 31 can advantageously be made in a single piece. The frame further comprises a front portion 37 and a rear portion 38 which are connected to each other by means of the two longitudinal elements 31 and 36. The front portion 37 of the frame is designed to be connected to a front axle of the industrial truck while the rear portion 38 of the frame 30 can be configured to be connected to a counterweight of the industrial truck and/or to the rear axle of the truck. In the embodiment shown in Figure 4, the frame 30 includes resting surfaces 39 intended to support the battery 13 when received in the compartment, where the resting surfaces 39 are obtained on respective shelves that protrude towards the lower central opening of the battery-holder compartment 12.

Preferably, the industrial truck comprises locking means designed to lock the door 11 in the opening position when the door is in the opening position. The industrial truck can further comprise locking means designed to lock the door in the closing position when the door is lowered to the closing position. The locking means can be made with any known locking/unlocking system that can comprise, for example, a lever mechanism, a system with a friction cable, etc. In an example, the guides 20 can include a plurality of locking holes designed to interact with a snap mechanical abutment to lock the door in a desired position.

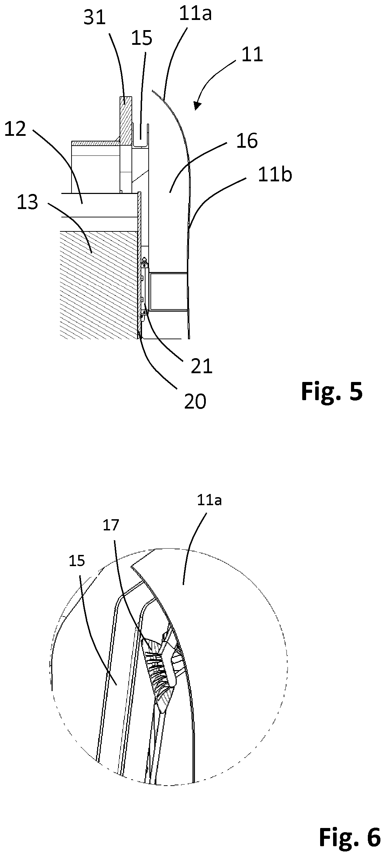

In a preferred embodiment, the industrial truck comprises a groove 15 for discharging water, as shown in Figures 2 and 5. The discharging groove 15 can be positioned above the lateral opening of the battery-holder compartment 12 and be arranged between the door 11 in a closing position and the frame 30 of the industrial truck, so as to convey rainwater outside the battery-holder compartment.

Preferably, as clearly shown in Figure 5, the door 11 includes a first portion 11b that is substantially flat and substantially vertical and a second folded portion 11a above the first portion 11b, where the second folded portion 11a is folded towards the frame 30 of the industrial truck so as to at least partially cover an interspace 16 between the door and the compartment. This solution allows to prevent external bodies from entering the battery compartment, increasing the reliability of the system and possible damage. The curvature of the door allows to form a sort of labyrinth that contributes to preventing the infiltration of water into the compartment 12. Furthermore, the folded part of the door 12 contributes to increasing the structural rigidity of the door 12 even if the thickness of the panel forming the door (for example in sheet metal) is relatively thin and light. This still allows to give the user a feeling of robustness even if the door has an extremely light structure.

Preferably, the door 12 includes a handle 17 fixed to the door 11 and at least in partly located in said interspace 16, preferably at the height of the second folded portion 11a. The handle 17 is accessible by a user from one side of the door 11.

In an embodiment, the door 11 is made with (or comprises) a panel of sheet metal. Preferably, the door 11 has a rigid shape.

The present disclosure also relates to a system including an industrial truck and a battery configured to be housed in the battery-holder compartment. The present disclosure also relates to an industrial truck provided without a battery; different types of batteries can be used with a given industrial truck.

In a further embodiment, an electric industrial truck is provided comprising a frame in which there is present a battery-holder compartment configured to house an electric battery, said compartment comprising a lateral opening for the removal/introduction of the electric battery into/from the battery-holder compartment, the industrial truck further comprising a door movable between a closing position, in which it at least partly closes the lateral opening, and an opening position, in which the door does not interfere with the electric battery passing through the lateral opening of the battery-holder compartment, wherein the door is mounted slidably with respect to the frame between the closing position and the opening position.

The system according to the present disclosure allows to assemble and operate a door of the battery-holder compartment effectively and durably with a cheap and simple structure. The linear guides allow to obtain a stable structure not prone to damage and wear. Furthermore, since the panel forming the door is constrained to the guides on opposite sides, it is possible to design the door so as to be lighter and cheaper; the lightness of the door allows to facilitate the manual opening and closing operations by the user. Thanks to the low friction of the self-lubricating guides, the opening/closing movement is enormously facilitated.

## Claims

1. An electric industrial truck comprising a frame (30) in which there is present a battery-holder compartment (12) configured to house an electric battery (13), said battery-holder compartment comprising a lateral opening, the industrial truck further comprising a door (11) movable between a closing position, in which it at least partly closes the lateral opening, and an opening position, in which the door allows access to the electric battery (13) in the battery-holder compartment (12) through the lateral opening, wherein the door (11) is mounted slidably with respect to the frame (30) between the closing position and the opening position.

2. An industrial truck according to claim 1, **characterized in that** it includes the battery (13) and **in that** in the opening position the door (11) allows the electric battery (13) to pass through the lateral opening of the battery-holder compartment (12).

3. An industrial truck according to one or more of the preceding claims, **characterised in that** it comprises a drive system and/or a system for handling material which can be power-supplied electrically through the electric battery (13) housed in the battery-holder compartment (12).

4. An industrial truck according to one or more of the preceding claims, **characterised in that** the battery-holder compartment (12) extends between a front axle and a rear axle of the industrial truck, preferably for an extension equal to at least 50% of the gap between the front axle and the rear axle in a longitudinal direction with respect to the truck.

5. An industrial truck according to one or more of the preceding claims, **characterised in that** the battery-holder compartment (12) extends between a front axle and a rear axle of the industrial truck for an extension equal to at least 70% of the gap between the front axle and the rear axle in a longitudinal direction with respect to the truck.

6. An industrial truck according to one or more of the preceding claims, **characterised in that** the door (11) is mounted slidably with respect to the frame (30) in a substantially vertical direction between the closing position and the opening position.

7. An industrial truck according to one or more of the preceding claims, **characterised in that** the battery-holder compartment (12) is open at the lower part to allow the removal/introduction of the electric battery (13) from/into the compartment (12) using transportation means that support the electric battery at the lower part.

8. An industrial truck according to one or more of the preceding claims, **characterised in that** the door (11) is mounted slidably along at least two guides (20), wherein the two guides are arranged on opposite sides of the lateral opening of the battery-holder compartment (12).

9. An industrial truck according to claim 8, **characterised in that** the frame (30) includes an inverted-U-shaped bearing element made in a single piece (31) which extends in a longitudinal direction of the truck and which comprises two substantially vertical portions (33, 34), wherein between the two substantially vertical portions (33, 34) there is positioned said lateral opening of the battery-holder compartment (12), each of said at least two guides (20) being fixed to one of the two substantially vertical portions (33, 34) of the inverted-U-shaped bearing element (31).

10. An industrial truck according to claim 8 or 9, **characterised in that** each guide (20) is associated with a slider (21) slidable along the guide, wherein the door (11) is fixed to each slider (21).

11. An industrial truck according to one or more of the preceding claims, **characterised in that** it comprises locking means designed to lock the door (11) in the opening position when the door is in the opening position.

12. An industrial truck according to one or more of the preceding claims, **characterized in that** it comprises a groove (15) for discharging water positioned above the lateral opening and arranged between the door (11) in a closing position and the frame (30) of the industrial truck, so as to convey rainwater outside the battery-holder compartment.

13. An industrial truck according to one or more of the preceding claims, **characterised in that** the door (11) includes a first portion (11b) that is substantially flat and substantially vertical and a second folded portion (11a) above the first portion (11b), where the second folded portion (11a) is folded towards the frame (30) of the industrial truck so as to at least partly cover an interspace (16) between the door and the compartment.

14. An industrial truck according to claim 13, **characterized in that** it comprises a handle (17) fixed to the door (11) at least partly located in said interspace (16), preferably at the height of the second folded portion (11a), said handle (17) being accessible by a user from one side of the door (11).

15. An industrial truck according to one or more of the preceding claims, **characterised in that** the door (11) comprises a panel of sheet metal.
